(19) 

**Europäisches Patentamt**
**European Patent Office**
**Office européen des brevets**

(11) **EP 4 592 964 A1**

(12) **EUROPEAN PATENT APPLICATION**

(43) Date of publication:
**30.07.2025 Bulletin 2025/31**

(21) Application number: **25154080.3**

(22) Date of filing: **27.01.2025**

(51) International Patent Classification (IPC):
***G06T 17/00*** (2006.01)

(52) Cooperative Patent Classification (CPC):
**G06T 17/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.01.2024 GR 20240100048**

(71) Applicant: **Google LLC**
**Mountain View, CA 94043 (US)**

(72) Inventors:
• **ALLDIECK, Thiemo Andreas**
**8002 Zürich (CH)**
• **SENGUPTA, Akash**
**London, N1C 4AG (GB)**
• **KOLOTOUROS, Nikolaos**
**8002 Zürich (CH)**
• **CORONA PUYANE, Enric**
**8002 Zürich (CH)**
• **ZANFIR, Andrei**
**8002 Zürich (CH)**
• **SMINCHISESCU, Cristian**
**8002 Zürich (CH)**

(74) Representative: **Varley, James Richard et al**
**Venner Shipley LLP**
**200 Aldersgate**
**London EC1A 4HD (GB)**

(54) **GENERATING 3D RECONSTRUCTIONS OF OBJECTS FROM CONDITIONING IMAGES USING DIFFUSION**

(57)    Methods, systems, and apparatuses, including computer programs encoded on computer storage media, for generating a 3D reconstruction of an object from a conditioning image of the object using a diffusion neural network.

**EP 4 592 964 A1**

**Description**

BACKGROUND

This specification relates processing data using machine learning models.

As one example, neural networks are machine learning models that employ one or more layers of nonlinear units to predict an output for a received input. Some neural networks include one or more hidden layers in addition to an output layer. The output of each hidden layer is used as input to another layer in the network, e.g., the next hidden layer or the output layer. Each layer of the network generates an output from a received input in accordance with current values of a respective set of weights.

SUMMARY

This specification describes a system implemented as computer programs on one or more computers in one or more locations that generates a three-dimensional reconstruction of an object, e.g., a human, a robot, an animal, or other agent, from a conditioning image of the object using a diffusion neural network system. In other words, the system generates a three-dimensional "model" of the shape of the body of the object from a two-dimensional image of the object.

The subject matter described in this specification can be implemented in particular embodiments so as to realize one or more of the following advantages.

This specification describes a probabilistic method for photorealistic 3D human reconstruction from a single RGB image.

Despite the ill-posed nature of this problem, existing techniques tend to be deterministic and output a single solution, often resulting in a lack of geometric detail and blurriness in unseen or uncertain regions. In contrast, the described approach predicts a distribution over 3D reconstructions conditioned on an image, which allows the system to sample multiple detailed 3D avatars that are consistent with the input image. At inference time, the system can sample a 3D shape by iteratively denoising renderings of the predicted intermediate representation.

As a result, the described techniques can produce diverse, more detailed reconstructions for the parts of the object that are not observed in the input image, and has competitive performance for the surface reconstruction of visible parts.

Further, in some cases, at inference time, the described techniques can use an additional generator neural network that approximates rendering with considerably reduced runtime (55 $\times$ speed up) relative to using a rendering engine, resulting in a novel dual-branch diffusion framework that provides improved performance with drastically reduced runtime.

The details of one or more embodiments of the subject matter of this specification are set forth in the accompanying drawings and the description below.

Other features, aspects, and advantages of the subject matter will become apparent from the description, the drawings, and the claims.

BRIEF DESCRIPTION OF DRAWINGS

FIG. 1 shows an example reconstruction generation system.
FIG. 2 is a flow diagram of an example process for generating a reconstruction of an obj ect.
FIG. 3 is a flow diagram of an example process for generating a 3D model from the final observation.
FIG. 4 is a flow diagram of an example process for updating the observation set.
FIG. 5 shows an example of the operation of the system.
FIG. 6 shows an example of the performance of the described techniques relative to conventional approaches.

Like reference numbers and designations in the various drawings indicate like elements.

DETAILED DESCRIPTION

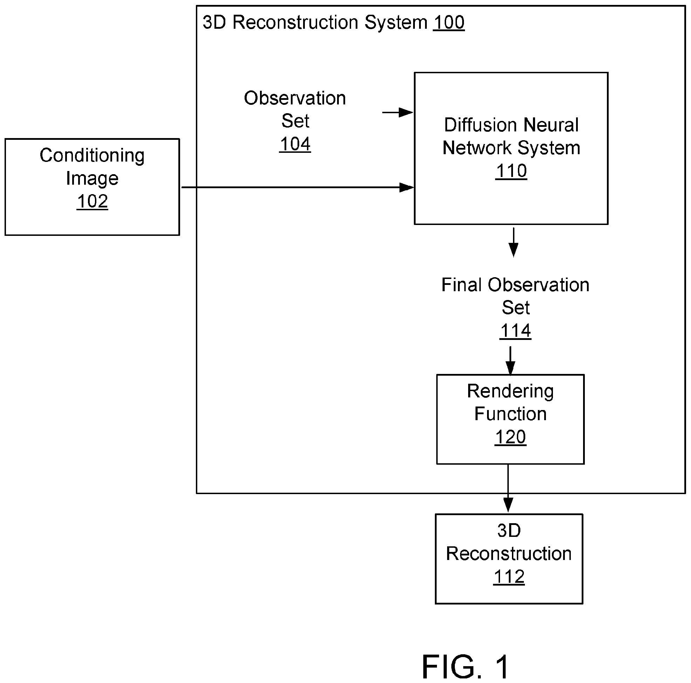

FIG. 1 shows an example reconstruction generation system 100. The reconstruction generation system 100 is an example of a system implemented as computer programs on one or more computers in one or more locations, in which the systems, components, and techniques described below can be implemented.

The system 100 generates a three-dimensional reconstruction 112 of an object, e.g., a human, a robot, an animal, or other agent, from a conditioning image 102 of the object using a diffusion neural network system 110.

For example, the conditioning image 102 can be a real-world image of the object captured using a camera device.

As another example, the conditioning image 102 can be a synthetic image of the object, e.g., generated using an image generation neural network or another image generation technique.

In other words, the system 100 generates a three-dimensional "model" 112 of the shape of the body of the object from a two-dimensional image of the object. The three-dimensional model 112 specifies the points on the three-dimensional surface that defines the body of the object and, optionally, identifies properties of some or all of the points, e.g., one or more of surface albedo color, shaded color, surface normal or depth maps. For example, the model 112 can be a mesh approximation of the surface, e.g., as generated by the Marching Cubes rendering algorithm. As another example, the model 112 can be a rendering of the surface using, e.g., a sphere tracing technique. Other examples of three-dimensional models can alternatively be used.

The generated reconstruction 112 can be used for any of a variety of purposes.

For example, the reconstruction 112 can be used to generate a three-dimensional "avatar" of the object for use in a virtual reality (VR), augmented reality (AR), or mixed reality (MR) environment.

As another example, the reconstruction 112 can be used to generate a three-dimensional avatar of the object for inclusion in a video game or other software application.

As yet another example, the reconstruction 112 can be used to insert a character representing the object into a video.

As yet another example, the reconstruction 112 can be used to generate a three-dimensional representation of the object for use in a fitness or health software application.

In particular, the system 100 obtains a conditioning image 102 of an object.

The system initializes an observation set 104 characterizing a surface in three-dimensional space that represents a three-dimensional model of the object. That is, the observation set 104 provides information about the set of points that make up the three-dimensional surface of the object in three-dimensional space.

Generally, the observation set is a set of image-based, pixel-aligned values that characterize one or more surfaces of the body of the object. That is, the observation set includes multiple "observations" that each correspond to one of the surfaces of the body of the object and that include a respective set of one or more values for each pixel in an image of the surface. The observation set will be described in more detail below.

The system 100 then updates the observation set 104 to generate a final observation set 114 across multiple sampling iterations using the diffusion neural network system 110.

The neural networks used by the system 100 are referred to as a "diffusion neural network system" because the system iteratively "denoises" the initialized observation set 104 by performing a reverse diffusion process using the neural networks.

As will be described below, making use of the diffusion neural network system 110, the system introduces stochasticity into the updating process, so that the final observation set 114 represents a plausible, probabilistic sample from the space of plausible observation sets.

In some cases, the system 100 can generate multiple final observation sets 114, e.g., in parallel, using the diffusion neural network system 110 to yield multiple different plausible samples from the space.

Performing this updating is described in more detail below.

The system 100 then generates a three-dimensional model 112 of the object from the final observation set 114, i.e., the observation set 104 after the final sampling iteration has been performed.

In some implementations, the system 100 first generates another updated observation set starting from the "final" observation set 114 and then generates the three-dimensional model by applying a rendering function 120 using features generated from the this further updated observation set. This will be described in more detail below.

In some other implementations, the system 100 directly applies the rendering function 120 to features generated using the final observation set 114.

Generating the 3D model from the final observation set 114 will be described in more detail below.

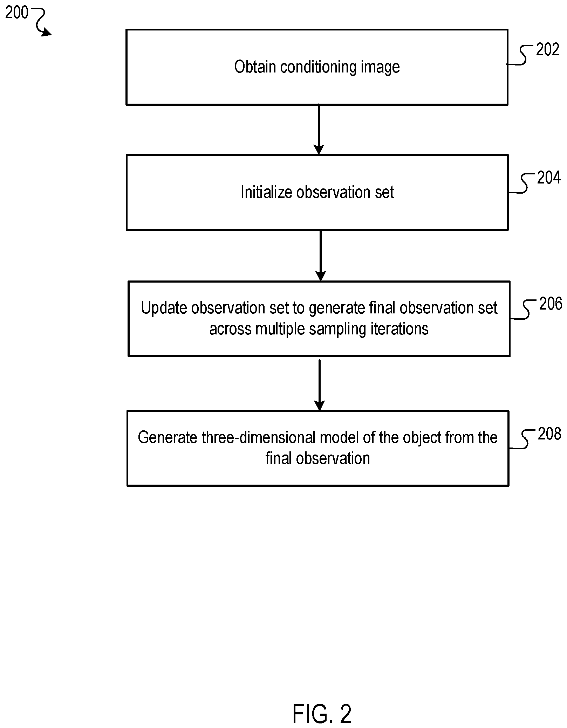

FIG. 2 is a flow diagram of an example process 200 for generating a three-dimensional (3D) reconstruction of an object. For convenience, the process 200 will be described as being performed by a system of one or more computers located in one or more locations. For example, a reconstruction generation system, e.g., the reconstruction generation system 100 of FIG. 1, appropriately programmed in accordance with this specification, can perform the process 200.

The system obtains a conditioning image of an object (step 202).

For example, the conditioning image can be a real-world image of the object captured using a camera device.

As another example, the conditioning image can be a synthetic image of the object, e.g., generated using an image generation neural network or another image generation technique.

The system initializes an observation set characterizing a surface in three-dimensional space that represents a three-dimensional model of the object (step 204). For example, the system can sample each value in the observation set from a respective noise distribution, e.g., a Gaussian distribution or another appropriate distribution. Because the system initializes the observation set by sampling noise, the system introduces stochasticity into the values in the final observation set. Thus, by independently sampling multiple different initial observation sets and generating a respective final observation set from each independently sampled initial observation set as described below, the system can effectively generate different plausible reconstructions from the same conditioning image.

As described above, the observation set is a set of image-based, pixel-aligned values that characterize one or more surfaces of the body of the object.

As a particular example of this, the observation set can include respective observations of each of multiple surfaces of a body of the object.

For example, the multiple surfaces can include a front surface and a back surface of the object relative to a fixed camera.

The observation for each of the surfaces of the object can include one or more of (i) an unshaded albedo color image of the surface, (ii) a surface normal image corresponding to the surface, or (iii) a depth map corresponding to the surface. Generally, the albedo color represents the base color of the surface without any lighting effects.

As a particular example, the observation for a given surface can include all three of (i), (ii), and (iii), so that when the multiple surfaces include the front surface and the back surface of the object, the observation set includes a set of observations for the front surface and a set of observations for the back surface:

$$x_0 = \{A^F, A^B, N^F, N^B, D^F, D^B\},$$

where F represents the front surface, B represents the back surface, A is an albedo color image, N is a surface normal image, and D is a depth map.

The system then updates the observation set to generate a final observation set across multiple sampling iterations using the diffusion neural network system (step 206).

As will be described below, the neural networks that make up the diffusion neural network system generally include a feature extractor neural network that extracts features of the 3d model from an observation set and a signed distance function neural network that generates an estimate of the signed distance from the surface of the object to a given input point. Optionally, to speed up inference times, the neural networks can also include a generator neural network that predicts an updated observation set from the features generated by the feature extractor neural network.

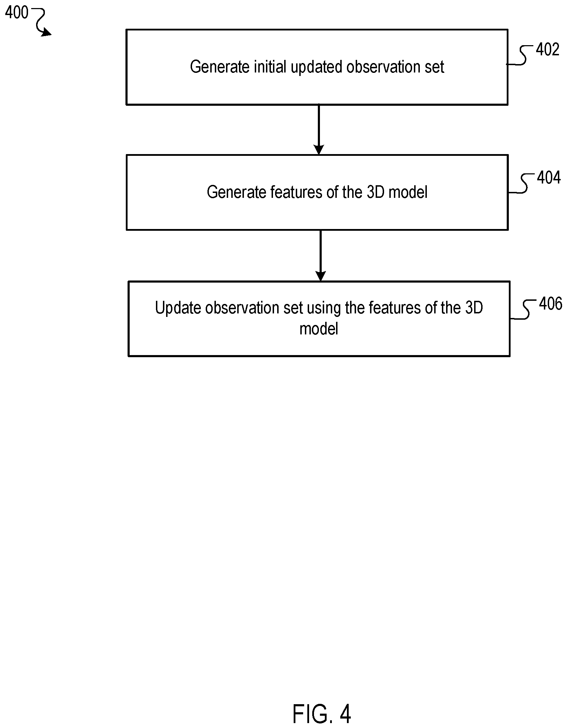

Updating the observation set at a given sampling iteration is described in more detail below with reference to FIG. 4.

After updating the feature, the system generates a three-dimensional model of the object from the final observation set (step 208).

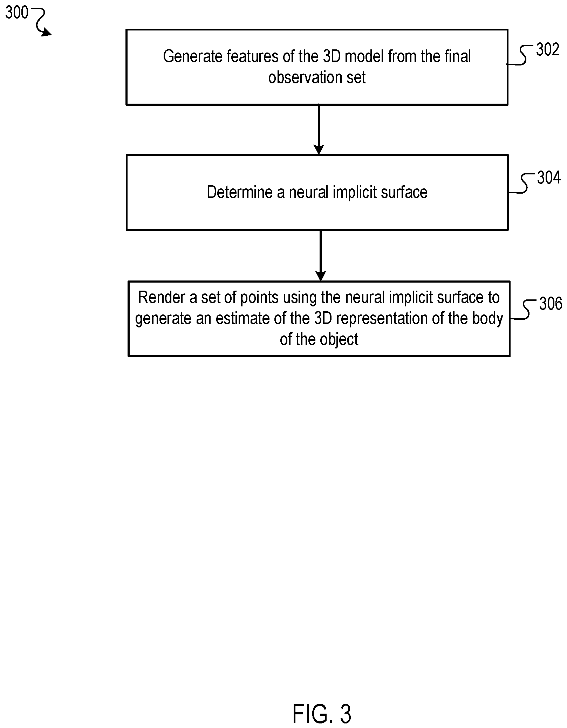

Generating the 3D model is described in more detail below with reference to FIG. 3.

FIG. 3 is a flow diagram of an example process 300 for generating a three-dimensional (3D) model from the final observation set. For convenience, the process 300 will be described as being performed by a system of one or more computers located in one or more locations. For example, a reconstruction generation system, e.g., the reconstruction generation system 100 of FIG. 1, appropriately programmed in accordance with this specification, can perform the process 300.

The system can generate, from the final observation set, features of the 3D model of the object (step 302).

The features can be, e.g., pixel-aligned features in the space of the conditioning image. That is, in this example, the features include a respective feature vector for each pixel in the conditioning image or for each region of pixels in the conditioning image.

The system can generate features of the 3D model from a given observation set in any of a variety of ways.

For example, the system can process the given observation set and the conditioning image using a feature extractor neural network to generate the features.

Optionally, prior to processing the final observation set using the feature extractor neural network, the system can apply another round of ancestral sampling (described below with reference to step 402) to the final observation set to generate a further updated observation set, and then process the further updated observation set using the feature extractor neural network.

The feature extractor neural network can generally have any appropriate architecture that allows the feature extractor neural network to map the observation set and the conditioning image to the features. For example, the feature extractor can be a convolutional neural network, e.g., one having a ResNet or a U-Net architecture. As another example, the feature extractor can be a vision Transformer neural network. As yet another example, the feature extractor can have both convolutional and self-attention layers.

Thus, the output of the feature extractor neural network can be represented as $g_\Theta(x, \mathbf{I})$, where x is the given observation set, and I is the conditioning image.

The system determines a neural implicit surface from the features (304). The neural implicit surface defines a set of points that makes up the surface of the object.

For example, the system can determine the neural implicit surface using a signed distance function neural network that is configured to receive an input derived from the features of the 3D model and an input point and to generate an output that estimates a signed distance of the input point from the neural implicit surface.

The output for a given point can also include other information. For example, the output can include an albedo color at the given point.

As a particular example, the input can include a feature vector for the input point that is generated by projecting the input point onto an image plane to generate a pixel location and bilinearly interpolating the features at the pixel location. The input can also include, e.g., the three-dimensional coordinates of the input point.

Thus, the output of the signed distance function neural network for a given point $p$, i.e., the signed distance and, optionally, the albedo color, can be represented as $f_\Theta(p; g_\Theta(x, \mathbf{I}))$, where x is the given observation set, and I is the conditioning image.

The signed distance function neural network can generally have any appropriate architecture that allows the neural network to map the input to the signed distance and, optionally, one or more other values. For example, the signed distance function neural network can be a multi-layer perceptron (MLP). As another example, the signed distance function neural network can be a convolutional neural network.

Thus, the system can identify, as the neural implicit surface, the set of points that the signed distance function maps to a signed distance of zero. That is, the neural implicit surface $S_\Theta(x, \mathbf{I})$ can be defined as the set of points that are mapped to a signed distance of zero by the signed distance function.

Thus, the surface is referred as "neural" because the points on the surface are defined using the output of the signed distance function neural network.

The surface is referred to as "implicit" because the set of points is only implicitly defined, i.e., the system has not yet actually determined the specific points that make up the surface.

The system renders the set of points using the neural implicit surface to generate an estimate of the three-dimensional representation of the body of the object (step 306). That is, the system applies a rendering function to neural implicit surface to generate the 3d model as follows:

$$\mathrm{render}(S_\Theta(x, \mathbf{I})).$$

In other words, the system performs a rendering process using outputs of the signed distance function neural network.

The system can use any of a variety of rendering functions to render the set of points.

As one example, the system can render the set of points using sphere tracing.

As another example, the system can extract a mesh from the set of points, e.g., using Marching Cubes or another appropriate technique, and then rasterize the extracted mesh.

In either of these examples, the system can optionally apply a computer graphics pipeline to the rendered points to render various additional properties for the rendered points, e.g., one or more of surface albedo color, shaded color, surface normal or depth maps.

FIG. 4 is a flow diagram of an example process 400 for updating the observation set at a sampling iteration. For convenience, the process 400 will be described as being performed by a system of one or more computers located in one or more locations. For example, a reconstruction generation system, e.g., the reconstruction generation system 100 of FIG. 1, appropriately programmed in accordance with this specification, can perform the process 400.

The system generates, from the current observation set, i.e., the observation set as of the current sampling iteration, an initial updated observation set (step 402).

For example, for the first sampling iteration, the system can use the initialized observation set as the initial updated observation.

For each subsequent sampling iteration, the system can perform ancestral sampling using the current observation set to generate the initial updated observation set. As a particular example, each sampling iteration can correspond to a respective time step t that has an associated noise level $\alpha_t$. The system can apply a diffusion sampler, e.g., DDPM or another appropriate sampler, to the current observation in accordance with the associated noise level for the time step to generate the initial updated observation set. Because the diffusion samplers generally update the observation set using sampled noise, performing this ancestral sampling injects stochasticity into the generation process.

The system generates, from the initial updated observation set, features of the three-dimensional model of the object (step 404). For example, the system can generate the features by processing the initial updated observation set and the conditioning image using the feature extraction neural network as described above.

The system then updates the observation set using the features of the three-dimensional model of the object (step 406).

In some cases, the system can perform this updating through rendering, as described above. That is, the system can generate an updated observation set by performing steps 304 and 306 to determine a current estimate of the 3D model of the object and then obtain the information in the observations in the observation set from the current estimate.

That is, the system can apply a rendering function to the current estimate of the 3D model to generate the values for the observations in the observation set, e.g., by applying a rendering function that includes a graphics pipeline that renders the values for the pixels in the observations in the observation set.

However, this can be computationally expensive. For example, any rendering function will require significant numbers of evaluations of the signed distance function neural network per pixel or per 3D grid point. Given that the denoising process can include a large number of sampling iterations, e.g., 50, 100, or 200 sampling iterations, these additional network evaluations at each sampling iterations can result in a significant amount of memory consumption and processor utilization during the generation process and can add significant latency to the generation process.

To avoid this, at some or all of the sampling iterations, the system can avoid generating the current estimate of the 3D model. Instead, the system can process the features of the 3D model using a generator neural network that directly generates the updated observation set from the features.

In particular, the generator neural network is a neural network that is configured to process the features of a current model, e.g., the features generated by the feature extraction neural network at the sampling iteration, to generate a prediction of the observation set defined by the current model. For example, the prediction generated by the generator neural network can include, for both the front and back surface of the object: (i) an unshaded albedo color image of the surface, (ii) a surface normal image corresponding to the surface, and (iii) a depth map corresponding to the surface.

Thus, the prediction generated by the generator neural network h can satisfy:

$$h_{\Theta}(g_{\Theta}(x, \mathbf{I}).$$

The generator neural network can generally have any appropriate architecture that allows the neural network to map the features, e.g., pixel-aligned features as described above, to an observation set, e.g., a set of observation "images." For example, the generator neural network can be a convolutional neural network, e.g., one having a ResNet or a U-Net architecture. As another example, the generator neural network can be a vision Transformer neural network. As yet another example, the generator neural network can have both convolutional and self-attention layers.

Thus, rather than performing rendering, the system can generate the updated observation set in a single forward pass through the generator neural network. Making use of the generator neural network therefore provides significant savings in terms of memory use and latency at inference-time. As a particular example, the system can use the "generator" neural network at each sampling iteration and only use the rendering function once, after the final observation set has been generated resulting in a significant speedup, e.g., 55x, relative to using the rendering function at each sampling iteration.

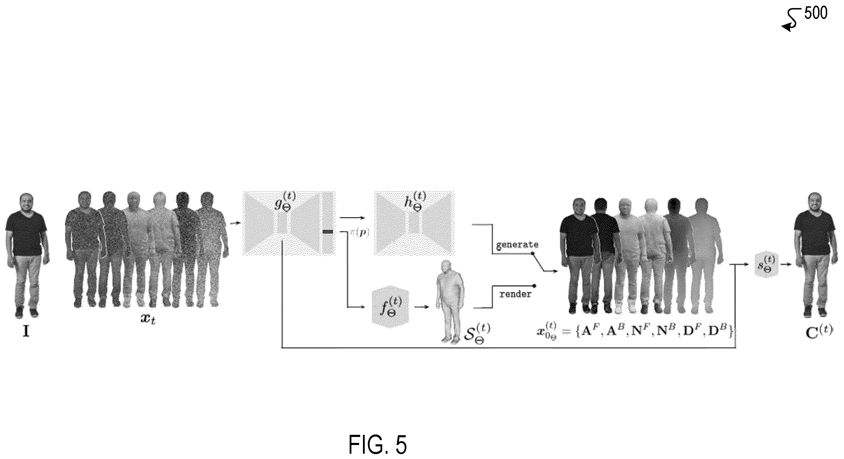

FIG. 5 shows an example 500 of the operation of the system during training.

As shown in the example 500, the system receives a conditioning image **I** of an object (in this example, the object is a person). The system also receives a ground truth observation set $x_0$ of the object.

For example, the system can obtain the conditioning image and the ground truth observation set from an existing set of training examples that each include a respective conditioning image and a respective ground truth observation set.

As another example, the system can generate the conditioning image and the ground truth image by extracting them from an existing 3D model, e.g., one of a training data set of 3D models.

As yet another example, the system can generate the conditioning image and the ground truth image by extracting measurements of a real-world object.

The system then uses the conditioning image and the ground truth observation set to train the feature extraction neural network, the signed distance function neural network and, in some implementations, the generator neural network using a diffusion framework.

In particular, the system generates a noisy observation set $x_t$ by applying noise to the ground truth observation set that represents a 3D model of the object.

For example, the system can sample noise and a time step t, and then apply the sampled noise to the ground truth observation set in accordance with the noise level associated with the sampled time step. In the example 500, the observation set includes the following for both the front and back surfaces of the object: albedo, depth, and normal renders.

The system processes the noisy observation set $x_t$ and the image I using the feature extraction neural network g to generate (noise-dependent) pixel-aligned features.

The system then applies a rendering function using the signed distance function neural network *f*, which receives inputs generated from the features, to generate a prediction of the actual observation set $x_0$. The system then trains the neural networks on an objective that measures errors between the prediction and the actual observation set. For example, the objective can be of the form:

$$||x_0 - \mathrm{render}(S_{\Theta}(x_t, \mathbf{I}), \pi)||_2^2,$$

where $\pi$ represents a fixed camera, e.g., the camera that captured the image **I**.

In some cases, the system can also use the conditioning image to provide a training signal during the training.

In particular, the system can also optionally produce a shaded image $\mathbf{C}^{(t)}$ from the same view as the conditioning image by applying a shading neural network *s* to the prediction of the actual observation set $x_0$. For example, when the conditioning image is taken from the front view, the shaded image can be generated as:

$$\mathbf{C}^{(t)} = \mathbf{A}^F \odot s_{\Theta}^t(\mathbf{N}^F, l(\mathbf{I})),$$

where $l(\mathbf{I})$ is a scene illumination code estimated from the conditioning image **I**.

The system can then train the neural networks, including the shading network, on an objective that measures the error between the shaded image and the conditioning image. For example, the objective can be of the form:

$$||\mathbf{C}^{(t)} - \mathbf{I}||_2^2.$$

In some implementations, to improve computational efficiency during inference, as described above, the system also trains the generator neural network h to predict the actual observation set $x_0$ from the features generated by the feature extraction neural network g. In particular, the system can generate an additional prediction of the ground truth observation set by processing the features generated by the feature extraction neural network g using the generator neural network h. The system can then train the generator neural network on an objective that measures errors between the additional prediction and the ground truth observation set. For example, the objective can be the same one described above.

Optionally, the system can generate an additional shaded image from the additional prediction using the shading neural network, e.g., as described above, and can also train the generator on an objective that measures errors between the additional shaded image and the conditioning image. For example, the objective can be the same as described above for the other shaded image generated from the rendered prediction.

By repeatedly performing the above operations for different training examples, i.e., that each include a respective conditioning image and a respective ground truth observation set, the system trains the neural networks so that the system can effectively generate plausible 3D models of new objects from new conditioning images.

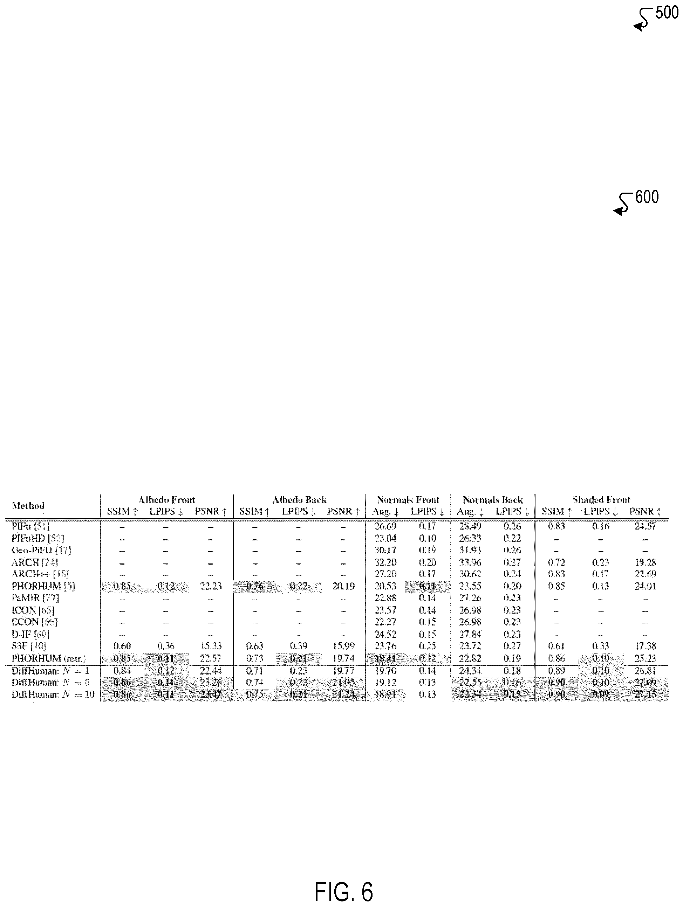

FIG. 6 shows an example 600 of the performance of the described techniques.

As shown in the example 600, when leveraging the probabilistic nature of the described approach by drawing multiple samples A, the described techniques ("DiffHuman") generally outperform a variety of existing techniques in terms of quality of the final observations in the final observation sets.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a Jax framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are correspond toed in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes correspond toed in the accompanying figures do not necessarily require the particular order shown, or sequential order, to achieve desirable results. In some cases, multitasking and parallel processing may be advantageous.

Aspects of the presented disclosure may be as set out in the following clauses:

Clause 1. A method performed by one or more computers, the method comprising:

obtaining a conditioning image of an object;
initializing an observation set characterizing a surface in three-dimensional space that represents a three-dimensional model of the object;
updating the observation set to generate a final observation set, the updating comprising, at each of a plurality of sampling iterations:

generating a denoising output for the sampling iteration, comprising processing a first diffusion input for the sampling iteration that comprises (i) the observation set and (ii) a representation of the conditioning image using a diffusion neural network to generate a first denoising output;
generating, from the denoising output, an initial updated observation set;
generating, from the initial updated observation set, features of the three-dimensional model of the object; and
updating the observation set using the features of the three-dimensional model of the object; and

generating a three-dimensional model of the object from the final observation set.

Clause 2. The method of clause 1, wherein initializing the observation set comprises:
sampling each value in the observation set from a respective noise distribution.

Clause 3. The method of any preceding clause, wherein the observation set comprises respective observations of each of multiple surfaces of a body of the object.

Clause 4. The method of clause 3, wherein the multiple surfaces comprise a front surface and a back surface of the object relative to a fixed camera.

Clause 5. The method of clause 3 or clause 4, wherein the observation for each of the surfaces of the object comprises one or more of:

an unshaded albedo color image of the surface;
a surface normal image corresponding to the surface; or
a depth map corresponding to the surface.

Clause 6. The method of any preceding clause, wherein generating a three-dimensional model of the object from the final observation set comprises:

generating, from the final observation set, features of the three-dimensional model of the object;
determining a set of points that defines a neural implicit surface from the features;
rendering the set of points to generate an estimate of the three-dimensional representation of the body of the object; and
determining an updated observation using the estimate.

Clause 7. The method of clause 6, wherein rendering the set of points comprises:
rendering the set of points using sphere tracing.

Clause 8. The method of clause 6, wherein rendering the set of points comprises:

extracting a mesh from the set of points; and
rasterizing the extracted mesh.

Clause 9. The method of any one of clauses 6-8, wherein determining a set of points that defines a neural implicit surface from the features comprises:
determining the set of points using a signed distance function neural network that is configured to receive an input derived from the features and an input point and to generate an output that estimates a signed distance of the input point from the neural implicit surface.

Clause 10. The method of clause 9, wherein the input to the signed distance function neural network comprises a feature vector for the input point that is generated by projecting the input point onto an image plane to generate a pixel location and bilinearly interpolating the features at the pixel location.

Clause 11. The method of any preceding clause, wherein, at each sampling iteration, updating the observation set using the features comprises: processing the features using a generator neural network to generate an updated observation set.

Clause 12. The method of any preceding clause, wherein generating, from the initial updated observation set, features of the three-dimensional model of the object comprises: processing the initial updated observation set and the conditioning image using a feature extractor neural network to generate the features.

Clause 13. The method of any preceding clause, wherein the features are pixel-aligned features in a space of the conditioning image.

Clause 14. A system comprising one or more computers and one or more storage devices storing instructions that are operable, when executed by the one or more computers, to cause the one or more computers to perform the operations of the respective method of any preceding clause.

Clause 15. A computer storage medium encoded with instructions that, when executed by one or more computers, cause the one or more computers to perform the operations of the respective method of any preceding clause.

**Claims**

1. A method performed by one or more computers, the method comprising:

   obtaining a conditioning image of an object;
   initializing an observation set characterizing a surface in three-dimensional space that represents a three-dimensional model of the object;
   updating the observation set to generate a final observation set, the updating comprising, at each of a plurality of sampling iterations:

   generating, from the observation set as of the sampling iteration, an initial updated observation set;
   generating, from the initial updated observation set, features of the three-dimensional model of the object; and
   updating the observation set using the features of the three-dimensional model of the object; and

   generating a three-dimensional model of the object from the final observation set.

2. The method of claim 1, wherein initializing the observation set comprises:
   sampling each value in the observation set from a respective noise distribution.

3. The method of any preceding claim, wherein the observation set comprises respective observations of each of multiple surfaces of a body of the object.

4. The method of claim 3, wherein the multiple surfaces comprise a front surface and a back surface of the object relative to a fixed camera.

5. The method of claim 3 or claim 4, wherein the observation for each of the surfaces of the object comprises one or more of:

   an unshaded albedo color image of the surface;
   a surface normal image corresponding to the surface; or
   a depth map corresponding to the surface.

6. The method of any preceding claim, wherein generating a three-dimensional model of the object from the final observation set comprises:

   generating, from the final observation set, features of the three-dimensional model of the object;
   determining a neural implicit surface from the features; and
   rendering a set of points using the neural implicit surface to generate an estimate of the three-dimensional representation of the body of the object.

7. The method of claim 6, wherein rendering the set of points comprises:
   rendering the set of points using sphere tracing.

8. The method of claim 6, wherein rendering the set of points comprises:

   extracting a mesh from the set of points; and
   rasterizing the extracted mesh.

9. The method of any one of claims 6-8, wherein determining the neural implicit surface from the features comprises:
   determining the neural implicit surface using a signed distance function neural network that is configured to receive an input derived from the features and an input point and to generate an output that estimates a signed distance of the input point from the neural implicit surface.

**10.** The method of claim 9, wherein the input to the signed distance function neural network comprises a feature vector for the input point that is generated by projecting the input point onto an image plane to generate a pixel location and bilinearly interpolating the features at the pixel location.

**11.** The method of any preceding claim, wherein, at each sampling iteration, updating the observation set using the features comprises:
processing the features using a generator neural network to generate an updated observation set.

**12.** The method of any preceding claim, wherein generating, from the initial updated observation set, features of the three-dimensional model of the object comprises:
processing the initial updated observation set and the conditioning image using a feature extractor neural network to generate the features.

**13.** The method of any preceding claim, wherein the features are pixel-aligned features in a space of the conditioning image.

**14.** A system comprising one or more computers and one or more storage devices storing instructions that are operable, when executed by the one or more computers, to cause the one or more computers to perform the operations of the respective method of any preceding claim.

**15.** A computer storage medium encoded with instructions that, when executed by one or more computers, cause the one or more computers to perform the operations of the respective method of any of claims 1 to 13.

EP 4 592 964 A1

3D Reconstruction System 100

Conditioning Image 102

Observation Set 104

Diffusion Neural Network System 110

Final Observation Set 114

Rendering Function 120

3D Reconstruction 112

FIG. 1

200

```
┌─────────────────────────────────────────┐
│                                         │  ⟍202
│        Obtain conditioning image        │
│                                         │
└─────────────────────────────────────────┘
                    │
                    ▼
┌─────────────────────────────────────────┐
│                                         │  ⟍204
│         Initialize observation set      │
│                                         │
└─────────────────────────────────────────┘
                    │
                    ▼
┌─────────────────────────────────────────┐
│ Update observation set to generate final │  ⟍206
│  observation set across multiple         │
│         sampling iterations              │
└─────────────────────────────────────────┘
                    │
                    ▼
┌─────────────────────────────────────────┐
│ Generate three-dimensional model of the │  ⟍208
│      object from the final observation   │
│                                         │
└─────────────────────────────────────────┘
```

FIG. 2

300

Generate features of the 3D model from the final observation set ⟋ 302

Determine a neural implicit surface ⟋ 304

Render a set of points using the neural implicit surface to generate an estimate of the 3D representation of the body of the object ⟋ 306

FIG. 3

400

Generate initial updated observation set — 402

Generate features of the 3D model — 404

Update observation set using the features of the 3D model — 406

FIG. 4

500

$x_{0_\Theta}^{(t)} = \{A^F, A^B, N^F, N^B, D^F, D^B\}$

$h_\Theta^{(t)}$

generate

render

$g_\Theta^{(t)}$

$\pi(p)$

$f_\Theta^{(t)}$

$S_\Theta^{(t)}$

$x_t$

$C^{(t)}$

$s_\Theta^{(t)}$

I

FIG. 5

⌐500

⌐600

| Method | Albedo Front | | | Albedo Back | | | Normals Front | | Normals Back | | Shaded Front | | |
|---|---|---|---|---|---|---|---|---|---|---|---|---|---|
| | SSIM ↑ | LPIPS ↓ | PSNR ↑ | SSIM ↑ | LPIPS ↓ | PSNR ↑ | Ang. ↓ | LPIPS ↓ | Ang. ↓ | LPIPS ↓ | SSIM ↑ | LPIPS ↓ | PSNR ↑ |
| PiFu [51] | – | – | – | – | – | – | 26.69 | 0.17 | 28.49 | 0.26 | 0.83 | 0.16 | 24.57 |
| PIFuHD [52] | – | – | – | – | – | – | 23.04 | 0.10 | 26.33 | 0.22 | – | – | – |
| Geo-PiFU [17] | – | – | – | – | – | – | 30.17 | 0.19 | 31.93 | 0.26 | – | – | – |
| ARCH [24] | – | – | – | – | – | – | 32.20 | 0.20 | 33.96 | 0.27 | 0.72 | 0.23 | 19.28 |
| ARCH++ [18] | – | – | – | – | – | – | 27.20 | 0.17 | 30.62 | 0.24 | 0.83 | 0.17 | 22.69 |
| PHORHUM [5] | 0.85 | 0.12 | 22.23 | 0.76 | 0.22 | 20.19 | 20.53 | 0.11 | 23.55 | 0.20 | 0.85 | 0.13 | 24.01 |
| PaMIR [77] | – | – | – | – | – | – | 22.88 | 0.14 | 27.26 | 0.23 | – | – | – |
| ICON [65] | – | – | – | – | – | – | 23.57 | 0.14 | 26.98 | 0.23 | – | – | – |
| ECON [66] | – | – | – | – | – | – | 22.27 | 0.15 | 26.98 | 0.23 | – | – | – |
| D-IF [69] | – | – | – | – | – | – | 24.52 | 0.15 | 27.84 | 0.23 | – | – | – |
| S3F [10] | 0.60 | 0.36 | 15.33 | 0.63 | 0.39 | 15.99 | 23.76 | 0.25 | 23.72 | 0.27 | 0.61 | 0.33 | 17.38 |
| PHORHUM (retr.) | 0.85 | 0.11 | 22.57 | 0.73 | 0.21 | 19.74 | 18.41 | 0.12 | 22.82 | 0.19 | 0.86 | 0.10 | 25.23 |
| DiffHuman: $N = 1$ | 0.84 | 0.12 | 22.44 | 0.71 | 0.23 | 19.77 | 19.70 | 0.14 | 24.34 | 0.18 | 0.89 | 0.10 | 26.81 |
| DiffHuman: $N = 5$ | 0.86 | 0.11 | 23.26 | 0.74 | 0.22 | 21.05 | 19.12 | 0.13 | 22.55 | 0.16 | 0.90 | 0.10 | 27.09 |
| DiffHuman: $N = 10$ | 0.86 | 0.11 | 23.47 | 0.75 | 0.21 | 21.24 | 18.91 | 0.13 | 22.34 | 0.15 | 0.90 | 0.09 | 27.15 |

FIG. 6

Europäisches
Patentamt

European
Patent Office

Office européen
des brevets

# EUROPEAN SEARCH REPORT

**Application Number**

EP 25 15 4080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SAITO SHUNSUKE ET AL: "PIFuHD: Multi-Level Pixel-Aligned Implicit Function for High-Resolution 3D Human Digitization", 2020 IEEE/CVF CONFERENCE ON COMPUTER VISION AND PATTERN RECOGNITION (CVPR), IEEE, 13 June 2020 (2020-06-13), pages 81-90, XP033803379, DOI: 10.1109/CVPR42600.2020.00016 [retrieved on 2020-08-03] | 1-10, 12-15 | INV. G06T17/00 |
| A | * figures 1,2,4 * * section 1 "Introduction", last two paragraphs * * section 3 * | 11 | |
| Y | BYUNGJUN KIM ET AL: "Chupa: Carving 3D Clothed Humans from Skinned Shape Priors using 2D Diffusion Probabilistic Models", ARXIV.ORG, CORNELL UNIVERSITY LIBRARY, 201 OLIN LIBRARY CORNELL UNIVERSITY ITHACA, NY 14853, 15 September 2023 (2023-09-15), XP091613836, | 1-10, 12-15 | |
| A | * abstract * * figures 1,2,3,4 * * section 3, paragraph 1 * | 11 | |

-----

-----

-/--

TECHNICAL FIELDS
SEARCHED        (IPC)

G06T

The present search report has been drawn up for all claims

| Place of search | Date of completion of the search | Examiner |
|---|---|---|
| Berlin | 4 June 2025 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 15 4080

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Saito Shunsuke ET AL: "PIFu: Pixel-Aligned Implicit Function for High-Resolution Clothed Human Digitization", arXiv.org, 3 December 2019 (2019-12-03), pages 1-15, XP093283359, Retrieved from the Internet: URL:https://arxiv.org/pdf/1905.05172 [retrieved on 2025-06-03] * figures 2,3 * * section 3, subsection "Digitization Pipeline" * * section 3.1 , paragraph 1 * ----- | 1-15 | |
| A | JONATHAN HO ET AL: "Denoising Diffusion Probabilistic Models", ARXIV.ORG, CORNELL UNIVERSITY LIBRARY, 201 OLIN LIBRARY CORNELL UNIVERSITY ITHACA, NY 14853, 16 December 2020 (2020-12-16), XP081839120, * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Berlin | 4 June 2025 | Gauthier, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................................
& : member of the same patent family, corresponding document

EPO FORM 1503 03.82 (P04C01)

page 2 of 2